# FASCICULE DE BREVET EUROPEEN

(11) **EP 4 290 097 B1**
(45) Date de publication et mention de la délivrance du brevet: **05.08.2026**
(21) Numéro de dépôt: 23178436.4
(22) Date de dépôt: 09.06.2023
(51) Int. Cl.: F16H 1/28, F02C 7/36, F16H 57/08

(54) **PORTE-SATELLITES POUR UN REDUCTEUR MECANIQUE DE TURBOMACHINE D'AERONEF**
PLANETENTRÄGER FÜR EIN MECHANISCHES REDUKTIONSGETRIEBE EINES TURBOTRIEBWERKS EINES LUFTFAHRZEUGS
PLANET CARRIER FOR A MECHANICAL GEARBOX OF AN AIRCRAFT TURBOMACHINE

(30) Priorité: 10.06.2022 FR 2205587
(43) Date de publication de la demande: 13.12.2023
(73) Titulaire: Safran Transmission Systems, 92700 Colombes (FR)
(72) Inventeur: MOULY, Guillaume Pierre, 77550 MOISSY-CRAMAYEL (FR)
(74) Mandataire: Gevers & Orès

(56) Documents cités:
- EP-A1- 3 892 895
- US-A1- 2010 292 044
- US-A1- 2013 184 120
- US-A1- 2018 051 798

## Description

### Domaine technique de l'invention

La présente invention concerne le domaine des réducteurs mécaniques pour des turbomachines en particulier d'aéronef, et en particulier les réducteurs équipés de satellites à double étage d'engrènement.

### Arrière-plan technique

L'état de l'art comprend notamment les documents WO-A1-2010/092263, FR-A1-2 987 416, FR-A1-3 011 901, FR-A1-3 041 054, FR-A1-3 058 493, US-A1-2010/292044, US-A1-2018/051798 et US-A1-2013/184120.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés de un ou plusieurs étages d'engrènement. Cet engrènement est assuré de différentes façons comme par contact, par friction ou encore par champs magnétique.

Dans la présente demande, on entend par « étage » ou « denture », une série de dents d'engrènement avec une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures ou deux séries de dents qui sont situées sur des diamètres différents. Une première denture coopère avec le solaire et une seconde denture coopère avec la couronne.

Il existe deux technologies de porte-satellites, les porte-satellites monoblocs et les portes-satellites qui comportent une cage et un portecage reliés ensemble par des liaisons souples.

La présente invention concerne les portes-satellites du type monobloc. Un porte-satellite de ce type comprend une cage formée d'une seule pièce avec une portion d'arbre.

La cage comporte deux flasques annulaires reliés ensemble par des ponts de matière, ces ponts de matière définissant entre eux et avec les flasques des logements de réception des satellites. Les flasques comportent des orifices de montage des extrémités axiales de paliers de guidage des satellites. Ces orifices sont couramment appelés « accueils ».

Une des problématiques d'un réducteur de ce type concerne la transmission des efforts en fonctionnement et le risque de désalignements des satellites. En effet, dans un porte-satellites monobloc, les efforts appliqués sur les satellites sont transmis par les paliers aux flasques du porte-satellites. La configuration du porte-satellites ne permet pas d'assurer une reprise de ces efforts de manière centrée par ces efforts, à cause de la présence de la couronne. L'équilibrage des efforts doit donc être réalisé par la géométrie du porte-satellites. Cependant, le porte-satellites est une pièce complexe avec peu d'espaces disponibles pour prévoir cette géométrie particulière.

L'invention apporte une solution à ce problème de manière simple, efficace et économique.

### Résumé de l'invention

L'invention concerne un porte-satellites selon la revendication 1.

L'invention propose ainsi de diminuer l'épaisseur localement du premier flasque, autour de chacun de ses orifices, de façon à augmenter sa souplesse (ou réduire sa raideur). Le premier flasque a ainsi, autour de ses orifices, une raideur inférieure à la raideur du second flasque, autour des orifices de ce second flasque. L'amincissement et donc l'assouplissement sont réalisés sur le premier flasque et non pas sur le second flasque, c'est-à-dire du côté de la reprise des efforts réalisée par la portion d'arbre du porte-satellites. Avantageusement, la souplesse du premier flasque est compensée par la rigidité de la portion d'arbre de façon à ce que les raideurs globales au niveau des deux côtés de chacun des paliers soient sensiblement identiques et donc équilibrées.

L'amincissement peut être réalisé par usinage du premier flasque par exemple.

Pour viser un optimum de raideur, l'épaisseur autour de chacun des orifices du premier flasque doit être la plus faible possible mais un minimum de matière est nécessaire pour assurer la transmission des efforts qui transite et pour limiter les contraintes.

Cette invention est compatible :
- d'un réducteur simple étage ou double étage ;
- d'un réducteur planétaire, épicycloïdal ou différentiel ;
- d'un porte-satellites monobloc ;
- de tout type de denture (droite, hélicoïdale ou en chevrons) ;
- de paliers hydrodynamiques et/ou à éléments roulants.

Le porte-satellites selon l'invention peut comprendre, conformément aux revendications, une ou plusieurs des caractéristiques suivantes, prises isolément les unes des autres, ou en combinaison les unes avec les autres :
- le premier flasque comprend une première face située du côté de ladite portion d'arbre, et une seconde face située du côté du second flasque, au moins la première face et/ou la seconde face comportant lesdites deux ou trois gorges ; on comprend ainsi que les gorges s'étendant autour d'un orifice peuvent être situées sur une des faces ou les deux faces du premier flasque,
- les gorges formées sur la première face et/ou la seconde face ont des diamètres différents,
- lesdites gorges sont au nombre de trois et comprennent deux gorges qui sont situées sur l'une des première et seconde faces comprend deux gorges et qui s'étendent l'une autour de l'autre et ont respectivement des diamètres D1 et D3, et une gorge située sur l'autre des première et seconde faces et qui a un diamètre D2 compris entre D1 et D3 ; les gorges de diamètres D1, D2 et D3 s'étendent ainsi autour d'un même orifice ,
- la ou chaque gorge a en section une forme générale incurvée ou en demi-cercle,
- l'amincissement réduit d'au moins 50% une épaisseur du premier flasque,
- chacun des premiers orifices a un diamètre interne qui est inférieur au diamètre interne de chacun des seconds orifices,
- ladite portion d'arbre comprend une denture externe.

La présente invention concerne encore un réducteur mécanique pour une turbomachine d'aéronef, ce réducteur comportant un porte-satellites tel que décrit ci-dessus, des satellites qui sont logés dans lesdits logements et qui sont guidés par des paliers dont des extrémités axiales sont engagées dans lesdites premiers et seconds orifices, et un solaire qui est logé dans la cage et qui est engrené avec les satellites.

La présente invention concerne encore une turbomachine d'aéronef comportant un porte-satellites ou un réducteur tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine d'aéronef,
[Fig.2] la figure 2 est une section axiale en vue partielle d'un réducteur mécanique,
[Fig.3] la figure 3 est une vue en coupe axiale d'un réducteur mécanique équipé de satellites à double étage d'engrènement, et illustre la technique antérieure à l'invention,
[Fig.4] la figure 4 est une vue en perspective du porte-satellites du réducteur de la figure 3,
[Fig.5] la figure 5 est une section axiale en vue partielle d'un porte-satellites et d'un réducteur mécanique selon un mode de réalisation de l'invention,
[Fig.6] la figure 6 est une vue en coupe axiale et en perspective d'un porte-satellites selon une variante de réalisation de l'invention ; et
[Fig.7a-7b] les figures 7a et 7b sont des vues similaires à celle de la figure 6 et montrent le porte-satellites de la figure 6 associé respectivement à un satellite à simple étage et à un satellite à double étage.

### Description détaillée de l'invention

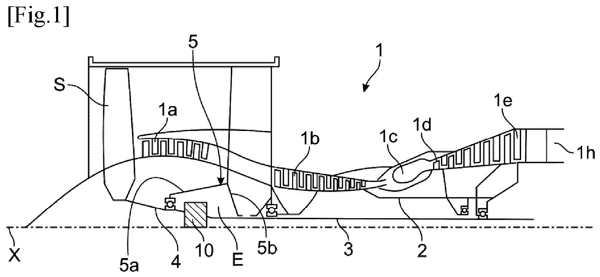

La figure 1 décrit une turbomachine 1 qui comporte, de manière classique, un axe de rotation X, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

La description qui suit concerne un réducteur du type planétaire dans lequel la couronne est mobile en rotation.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des étanchéités au niveau d'un palier permettant la traversée de l'arbre de soufflante 4, et en aval par des joints au niveau de la traversée de l'arbre BP 3.

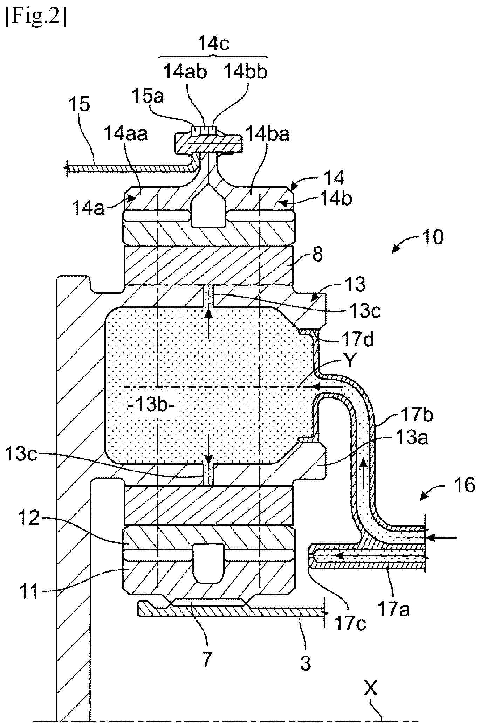

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.
▪ Dans cette configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture d'un réducteur peut être séparée en plusieurs hélices présentant chacun un plan médian P. Dans l'exemple représenté, la couronne est séparée en deux demicouronnes:
▪ une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
▪ une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

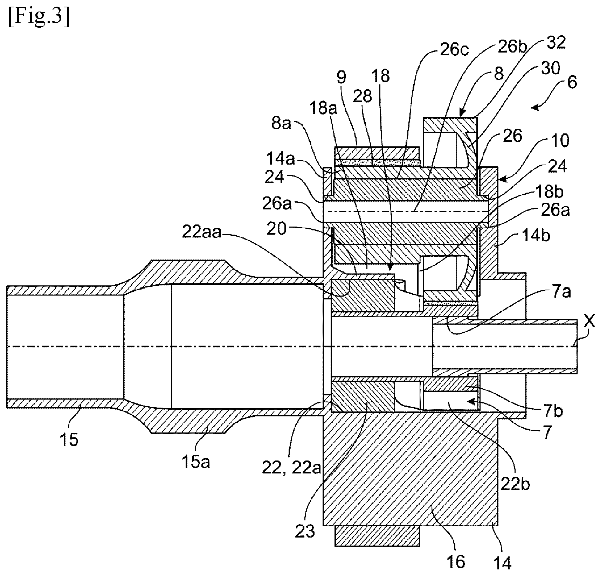

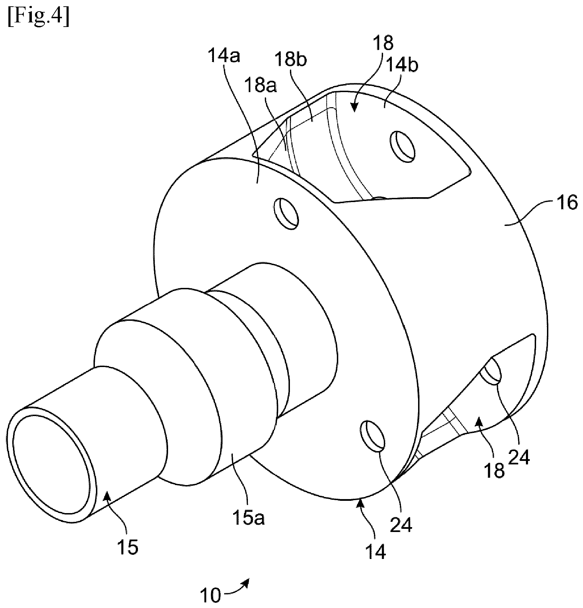

Les figures 3 et 4 représentent un réducteur 6 de turbomachine d'aéronef selon la technique antérieure.

Le réducteur 6 comprend un porte-satellites 10 qui est configuré pour être mobile en rotation autour de l'axe X et qui est du type monobloc, c'est-à-dire formé d'une seule pièce.

Ce porte-satellites 10 comprend une cage 14 et une portion d'arbre 15.

La portion d'arbre 15 a une forme générale tubulaire et allongée le long de l'axe X et comprend une extrémité longitudinale libre, ici à gauche sur les dessins, et une extrémité longitudinale opposée de liaison à la cage 14.

La portion d'arbre 15 comprend une denture externe 15a d'engrènement, par exemple avec une soufflante.

La cage 14 comporte deux flasques annulaires 14a, 14b qui sont parallèles et à distance l'un de l'autre et s'étendent perpendiculairement à l'axe X. Les flasques 14a, 14b ont une forme générale circulaire et sont centrées sur l'axe X.

Le flasque 14a, appelé premier flasque, à gauche sur le dessin, est relié à la portion d'arbre 15. L'autre flasque 14b est appelé second flasque.

Les flasques 14a, 14b sont reliés entre eux par des ponts de matière 16 qui définissent entre eux et avec les flasques des logements 18 configurés pour recevoir les satellites 8. Les logements 18 débouchent radialement vers l'extérieur à la périphérie externe de la cage 14, et débouchent également radialement à l'intérieur en traversant une paroi tubulaire interne 20 de la cage 14. Les ponts de matière 16 peuvent être pleins ou en partie évidés.

La paroi 20 s'étend autour de l'axe X, depuis le premier flasque 14a en direction du second flasque 14b. Elle s'étend ici sensiblement dans le prolongement axial de la portion d'arbre 15. Cette paroi 20 délimite intérieurement un espace 22 de logement du solaire 7.

Cet espace 22 comprend deux parties adjacentes. La première partie 22a est entourée par la paroi 20 qui comprend une surface cylindrique interne 22a de montage d'un palier 23 de guidage d'une extrémité du solaire 7. La seconde partie 22b, située au niveau des débouchés des logements 18, reçoit l'extrémité opposée du solaire 7, qui comprend une denture externe 7b d'engrènement avec les satellites 8. Le solaire 7 comprend en outre une denture interne 7a d'accouplement à un arbre par exemple de turbine.

Les logements 18 comportent chacun une première partie 18a qui est située du côté du premier flasque 14a, et une seconde partie 18b qui est située du côté du second flasque 14b. Les logements 18 débouchent à la périphérie externe de la cage 14, au niveau de ses deux parties 18a, 18b, et à la périphérie interne de la cage 14, au niveau des secondes parties 18b seulement.

Les flasques 14a, 14b comprennent des orifices 24 alignés de montage des satellites 8 et en particulier de paliers lisses 26 de ces satellites 8. Chaque palier 26 a une forme générale cylindrique qui s'étend parallèlement à l'axe X et dont les extrémités longitudinales comprennent des extensions 26a logées dans les orifices 24 formant des sièges.

De façon connue, chaque palier 26 peut comprendre un alésage interne 26b de circulation d'huile qui communique en général avec des conduits d'amenée d'huile jusqu'à la surface cylindrique externe 26c du palier en vue de la formation d'un film d'huile sur cette surface 26c.

Les satellites 8 sont ici du type à double étage d'engrènement et comprennent chacun un corps tubulaire 8a équipé d'une première denture 28 externe et relié par un voile 30 à une seconde denture 32 externe.

Les dentures 28, 32 sont disposées à côté l'une de l'autre et plus particulièrement sont situées respectivement dans deux plans perpendiculaires à l'axe X.

La première denture 28, située à gauche sur les dessins, est située du côté du premier flasque 14a et donc au niveau de la première partie 18a du logement. Comme cela est visible à la figure 3, cette denture 28 est engrenée avec la couronne 9.

La seconde denture 32, située à droite sur les dessins, est située du côté du second flasque 14b et donc au niveau de la seconde partie 18b du logement. Comme cela est visible à la figure 3, cette denture 32 est engrenée avec la denture 7b du solaire 7.

Comme on le voit à la figure 3, les ponts de matière 16 s'étendent radialement, entre les logements 18, depuis la paroi 20 et la périphérie interne des flasques 14a, 14b jusqu'à la périphérie externe des flasques.

Dans ce type de porte-satellites, il est important d'assurer une reprise des efforts en fonctionnement entre la turbine et le porte-satellites. Les efforts transitent d'abord par la portion d'arbre 15 puis parviennent jusqu'au flasque amont 14a. Ils passent alors par le flasque amont 14a pour transiter à travers les paliers 26 et les satellites 8. Cette transmission des efforts par l'intermédiaire d'un des flasques risque d'entraîner un basculement des satellites 8 et donc des désalignements entre leurs dentures 28, 32 et celles du solaire 7 et de la couronne 9.

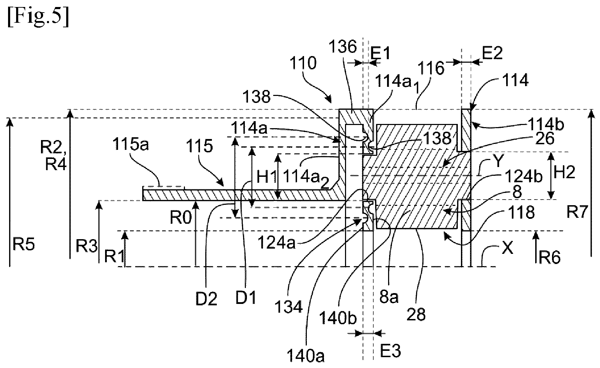

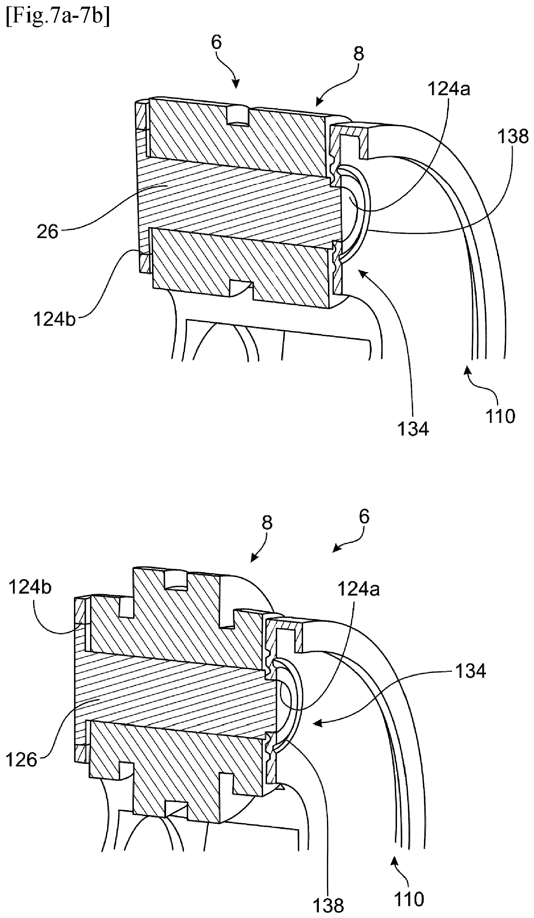

L'invention propose de remédier à ce problème grâce à un porte-satellites dont un premier mode de réalisation est illustré à la figure 5 et dont des variantes sont illustrées aux figures 7, 8a et 8b.

La description qui suit concerne les caractéristiques du porte-satellites selon l'invention. Ce porte-satellites est destiné à être monté dans un réducteur mécanique du type précité et qui ne sera pas décrit dans le détail dans ce qui suit. La description qui précède faite en relation avec les figures 1 à 4 peut ainsi être utilisée pour décrire un réducteur comportant un porte-satellites selon l'invention.

Le porte-satellites 110 de la figure 5 est du type monobloc, c'est-à-dire formé d'une seule pièce.

Ce porte-satellites 110 comprend une cage 114 et une portion d'arbre 115.

La portion d'arbre 115 a une forme générale tubulaire et allongée le long de l'axe X et comprend une extrémité longitudinale libre, ici à gauche sur les dessins, et une extrémité longitudinale opposée de liaison à la cage 114.

La portion d'arbre 115 comprend une denture externe 115a d'engrènement, par exemple avec un arbre de soufflante.

La cage 114 comporte deux flasques annulaires 114a, 114b qui sont parallèles et à distance l'un de l'autre et s'étendent perpendiculairement à l'axe X. Les flasques 114a, 114b ont une forme générale circulaire et sont centrées sur l'axe X.

Le flasque 114a, appelé premier flasque, à gauche sur le dessin, est relié à la portion d'arbre 115. L'autre flasque 114b est appelé second flasque.

Les flasques 114a, 114b sont reliés entre eux par des ponts de matière 116 qui définissent entre eux et avec les flasques des logements 118 configurés pour recevoir les satellites 8. Les logements 118 débouchent radialement vers l'extérieur à la périphérie externe de la cage 114, et débouchent également radialement à l'intérieur. Les ponts de matière 116 peuvent être pleins ou en partie évidés.

Les flasques 114a, 114b comprennent des orifices 124a, 124b alignés de montage des satellites 8 et en particulier de paliers lisses 26 de ces satellites 8. Chaque palier 26 a une forme générale cylindrique qui s'étend parallèlement à l'axe X et dont les extrémités longitudinales comprennent des extensions 26a logées dans les orifices 124 formant des sièges ou des accueils. Les orifices 124a du premier flasque 14a sont appelés premiers orifices, et les orifices 124b du second flasque 14b sont appelés seconds orifices.

De façon connue, chaque palier 26 peut comprendre un alésage interne de circulation d'huile comme évoqué dans ce qui précède.

Les satellites 8 sont ici du type à simple étage d'engrènement et comprennent chacun un corps tubulaire 8a équipé d'une denture externe 28 destinée à être engrenée avec la couronne (non représentée) et le solaire (également non représenté).

Selon l'invention, le premier flasque 114a comporte au moins un amincissement 134 autour de chacun des premiers orifices 124a. Cet amincissement 134 définit une épaisseur minimale E1 de matière en direction axiale qui est inférieure à une épaisseur minimale E2 du second flasque 114b autour de chacun des seconds orifices 114b.

Dans l'exemple représenté qui n'est pas limitatif, le premier flasque 114a est à double paroi et comprend deux parois 114a1, 114a2 parallèles, respectivement une première paroi 114a1 et une seconde paroi 114a2 qui sont reliées ensemble par un voile annulaire 136 au niveau de leurs périphéries externes. La première paroi 114a1 est reliée par les ponts de matière 116 au second flasque 114b et comporte l'amincissement 134. La seconde paroi 114a2 est reliée à la portion d'arbre 115.

On note :
- R0 est le diamètre interne de la portion d'arbre 115,
- R1 le diamètre interne de la première paroi 114a1 ou du premier flasque 114a,
- R2 le diamètre externe de la première paroi 114a1 ou du premier flasque 114a,
- R3 le diamètre interne de la seconde paroi 114a2,
- R4 le diamètre externe de la seconde paroi 114a2,
- R5 le diamètre moyen ou externe de la virole 136,
- R6 le diamètre interne du flasque 114b,
- R7 le diamètre externe du flasque 114b.

Ces rayons sont mesurés par rapport à l'axe X.

De préférence, R2, R4, R5 et R7 sont proches, similaires ou identiques.

De préférence, R1 et R6 sont proches, similaires ou identiques.

De préférence, R0 et R3 sont proches, similaires ou identiques.

De préférence, R1 et R6 sont proches, similaires ou identiques.

De préférence, R1 est inférieur à R3 et/ou R0.

De préférence, R6 est inférieur à R3 et/ou R0.

Les orifices 124a, 124b ont respectivement des diamètres H1 et H2. Dans l'exemple représenté, ces diamètres sont proches, similaires ou identiques. Ces diamètres sont mesurés par rapport à l'axe Y.

Dans un mode préféré de réalisation de l'invention, l'amincissement 134 comprend au moins une gorge 138, et de préférence deux ou trois gorges coaxiales, s'étendant autour de chacun des orifices 124a.

Le premier flasque 114a, et en particulier sa paroi 114a2, comprend une première face 140a située du côté de la portion d'arbre, et une seconde face 140b située du côté du second flasque 114b.

Dans l'exemple représenté, la face 140a comporte une gorge 138 de diamètre D2 et la face 140b comporte une gorge 138 de diamètre D1. Les diamètres D1 et D2 sont différents et D1 et en particulier plus petit que D2 ici.

Chaque gorge 138 a en section une forme générale incurvée ou en demi cercle.

Chaque gorge 138 génère une réduction d'épaisseur du premier flasque 114a, et en particulier de la paroi 114a1, qui est de préférence supérieure ou égale à 50%. Autrement dit, E1 ≤ 0,5.E3, E3 étant l'épaisseur moyenne du reste du flasque 114a. De la même façon, de préférence E1 ≤ 0,5.E2.

La formation, par exemple par usinage, des gorges 138 sur les deux faces 140a, 140b de la paroi 114a1 et le fait qu'elles aient des diamètres D1, D2 différents induit une forme en S ou en soufflet en coupe transversale de la partie du flasque 114a qui' s'étend autour de chaque orifice 124a.

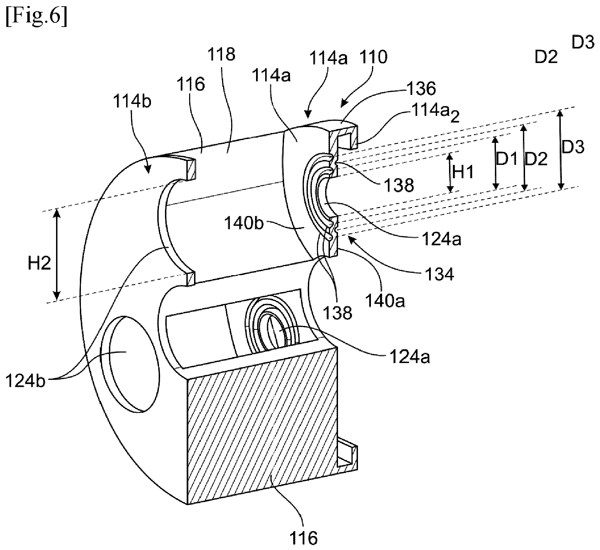

La figure 6 illustre une variante de réalisation du porte-satellites 110 dont le flasque 114a est ici équipé de trois gorges d'amincissement.

L'une des faces de la paroi 114a1, ici la face 140b, comprend deux gorges 138 qui s'étendent l'une autour de l'autre et ont respectivement des diamètres D1 et D3, et l'autre face 140a comprend une gorge 138 ayant un diamètre D2 compris entre D1 et D3.

Par ailleurs, dans cette variante, on constate que les orifices 124a, 124b des flasques ont des diamètres H1, H2 différents. En particulier, les orifices 124a du premier flasque 114a ont chacun un diamètre interne H1 qui est inférieur au diamètre interne H2 de chacun des orifices 124b du second flasque 114b.

Ceci permet de rigidifier le bord de l'orifice 124b opposé à la souplesse pour augmenter sa raideur et de privilégier un diamètre petit pour l'orifice 124a afin de maximiser la zone usinable pour les gorges 138.

Les figures 7a et 7b montrent que le porte-satellites 110 selon l'invention, quel que soit son mode de réalisation, peut être associé à des satellites 8 à simple ou double étage.

L'invention apporte plusieurs avantages parmi lesquels :
- solution facile à mettre en place dans un espace contraint ;
- gain mesurable et paramétrable sur la souplesse ;
- amélioration la centrabilité des efforts sur un porte-satellites monobloc.

## Revendications

1. Porte-satellites (110) pour un réducteur mécanique (6) de turbomachine (1), en particulier d'aéronef, ce porte-satellites ayant un axe principal (X) et comportant une cage (114) formée d'une seule pièce avec une portion d'arbre (115) centrée sur l'axe (X), la cage comportant deux flasques (114a, 114b) annulaires s'étendant autour de l'axe (X) dont un, appelé premier flasque (114a), est relié à ladite portion d'arbre (115) et l'autre, appelé second flasque (114b), est relié au premier flasque par des ponts de matière (16) répartis autour de l'axe (X), lesdits ponts de matière (116) définissant entre eux et avec les flasques (114a, 114b) des logements (118) configurés pour recevoir des satellites (8), les premier et seconds flasques (114a, 114b) comportant respectivement des premiers et seconds orifices (124a, 124b) de montage des satellites (8) qui sont orientés axialement et qui débouchent dans lesdits logements (118),
le premier flasque (114a) comportant un amincissement (134) autour de chacun des premiers orifices (124a), l'amincissement (134) définissant une épaisseur minimale de matière (E1) en direction axiale qui est inférieure à une épaisseur minimale (E2) du second flasque (114b) autour de chacun des seconds orifices (124b),
**caractérisé en ce que** l'amincissement (134) comprend deux ou trois gorges (138) coaxiales s'étendant autour de chacun desdits premiers orifices (124a),
et **en ce que** le premier flasque (114a) est à double paroi et comprend deux parois parallèles, respectivement une première paroi (114a1) et une seconde paroi (114a2), qui sont reliées ensemble par un voile annulaire (136) au niveau de leurs périphéries externes, la première paroi (114a1) étant reliée par les ponts de matière (116) au second flasque (114b) et comportant ledit au moins un amincissement (134), et ladite seconde paroi (114a2) étant reliée à ladite portion d'arbre (115).

2. Porte-satellites (110) selon la revendication 1, dans lequel le premier flasque (114a) comprend une première face (140a) située du côté de ladite portion d'arbre (115), et une seconde face (140b) située du côté du second flasque (114b), au moins la première face (140a) et/ou la seconde face (140b) comportant lesdites deux ou trois gorges (138).

3. Porte-satellites (110) selon la revendication 2, dans lequel les gorges (138) formées sur la première face et/ou la seconde face (140a, 140b) ont des diamètres (D1, D2, D3) différents.

4. Porte-satellites (110) selon la revendication 2 ou 3, dans lequel lesdites gorges (138) sont au nombre de trois et comprennent deux gorges (138) qui sont situées sur l'une des première et seconde faces (140b) et qui s'étendent l'une autour de l'autre et ont respectivement des diamètres D1 et D3, et une gorge (138) située sur l'autre des première et seconde faces (140a) et qui a un diamètre D2 compris entre D1 et D3.

5. Porte-satellites (110) selon l'une des revendications précédentes, dans lequel chaque gorge (138) a en section une forme générale incurvée ou en demi-cercle.

6. Porte-satellites (110) selon l'une des revendications précédentes, dans lequel l'amincissement (134) réduit d'au moins 50% une épaisseur du premier flasque (114a)

7. Porte-satellites (110) selon l'une des revendications précédentes, dans lequel chacun des premiers orifices (124a) a un diamètre interne (H1) qui est inférieur au diamètre interne (H2) de chacun des seconds orifices (124b).

8. Porte-satellites (110) selon l'une des revendications précédentes, dans lequel ladite portion d'arbre (115) comprend une denture externe (115a).

9. Réducteur mécanique (6) pour une turbomachine d'aéronef, ce réducteur comportant un porte-satellites (110) selon l'une des revendications 1 à 8, des satellites (8) qui sont logés dans lesdits logements (118) et qui sont guidés par des paliers (126) dont des extrémités axiales sont engagés dans lesdits premiers et seconds orifices (124a, 124b), et un solaire (7) qui est logé dans la cage et qui est engrené avec les satellites (8).

10. Turbomachine (1) d'aéronef, comportant un porte-satellites (110) selon l'une des revendications 1 à 8 ou un réducteur (6) selon la revendication 9.

## Patentansprüche

1. Satellitenträger (110) für ein mechanisches Untersetzungsgetriebe (6) eines Turbotriebwerks (1), insbesondere eines Luftfahrzeugs, wobei dieser Satellitenträger eine Hauptachse (X) aufweist und einen Käfig (114) umfasst, der einstückig mit einem auf die Achse (X) zentrierten Wellenabschnitt (115) ausgebildet ist, wobei der Käfig zwei ringförmige Flansche (114a, 114b) aufweist, die sich um die Achse (X) erstrecken, von denen einer, der als erster Flansch (114a) bezeichnet wird, mit dem Wellenabschnitt (115) verbunden ist und der andere, der als zweiter Flansch (114b) bezeichnet wird, über Materialbrücken (16) mit dem ersten Flansch verbunden ist, die um die Achse (X) verteilt sind, wobei die Materialbrücken (116) zwischen sich und mit den Flanschen (114a, 114b) Aufnahmen (118) bilden, die zur Aufnahme von Satelliten (8) konfiguriert sind, wobei der erste und zweite Flansch (114a, 114b) jeweils erste und zweite Öffnungen (124a, 124b) zur Montage der Satelliten (8) aufweisen, die axial ausgerichtet sind und in die Aufnahmen (118) münden,
wobei der erste Flansch (114a) um jede der ersten Öffnungen (124a) herum eine Verdünnung (134) aufweist, wobei die Verdünnung (134) eine minimale Materialstärke (E1) in axialer Richtung definiert, die geringer ist als eine minimale Materialstärke (E2) des zweiten Flansches (114b) um jede der zweiten Öffnungen (124b) herum,
**dadurch gekennzeichnet, dass** die Verdünnung (134) zwei oder drei koaxiale Nuten (138) umfasst, die sich um jede der ersten Öffnungen (124a) herum erstrecken,
und dass der erste Flansch (114a) doppelwandig ist und zwei parallele Wände umfasst, jeweils eine erste Wand (114a1) und eine zweite Wand (114a2), die durch einen ringförmigen Steg (136) an ihren Außenumfängen miteinander verbunden sind, wobei die erste Wand (114a1) über die Materialbrücken (116) mit dem zweiten Flansch (114b) verbunden ist und die mindestens eine Verdünnung (134) aufweist, und wobei die zweite Wand (114a2) mit dem Wellenabschnitt (115) verbunden ist.

2. Satellitenträger (110) nach Anspruch 1, wobei der erste Flansch (114a) eine erste Seite (140a) aufweist, die sich auf der Seite des genannten Wellenabschnitts (115) befindet, und eine zweite Seite (140b), die sich auf der Seite des zweiten Flansches (114b) befindet, wobei mindestens die erste Seite (140a) und/oder die zweite Seite (140b) die zwei oder drei Nuten (138) aufweist.

3. Satellitenträger (110) nach Anspruch 2, wobei die Nuten (138), die auf der ersten Seite und/oder der zweiten Seite (140a, 140b) ausgebildet sind, unterschiedliche Durchmesser (D1, D2, D3) aufweisen.

4. Satellitenträger (110) nach Anspruch 2 oder 3, wobei die Nuten (138) in einer Anzahl von drei vorliegen und zwei Nuten (138) umfassen, die sich auf einer der ersten und zweiten Seiten (140b) befinden, und die sich umeinander herum erstrecken und jeweils die Durchmesser D1 und D3 aufweisen, sowie eine Nut (138), die sich auf der anderen der ersten und zweiten Seiten (140a) befindet und einen Durchmesser D2 zwischen D1 und D3 aufweist.

5. Satellitenträger (110) nach einem der vorstehenden Ansprüche, wobei jede Nut (138) im Querschnitt eine allgemein gekrümmte oder halbkreisförmige Form aufweist.

6. Satellitenträger (110) nach einem der vorstehenden Ansprüche, wobei die Verdünnung (134) die Dicke des ersten Flansches (114a) um mindestens 50 % verringert

7. Satellitenträger (110) nach einem der vorstehenden Ansprüche, wobei jede der ersten Öffnungen (124a) einen Innendurchmesser (H1) aufweist, der kleiner ist als der Innendurchmesser (H2) jeder der zweiten Öffnungen (124b).

8. Satellitenträger (110) nach einem der vorstehenden Ansprüche, wobei der Wellenabschnitt (115) eine Außenverzahnung (115a) umfasst.

9. Mechanisches Untersetzungsgetriebe (6) für ein Turbotriebwerk eines Luftfahrzeugs, wobei dieses Untersetzungsgetriebe einen Satellitenträger (110) nach einem der Ansprüche 1 bis 8 umfasst, Satelliten (8), die in den Aufnahmen (118) gelagert sind und die von Lagern (126) geführt werden, deren axiale Enden in den ersten und zweiten Öffnungen (124a, 124b) im Eingriff sind, und ein Sonnenrad (7), das im Käfig gelagert ist und mit den Satelliten (8) in Eingriff steht.

10. Turbotriebwerk (1) eines Luftfahrzeugs, das einen Satellitenträger (110) nach einem der Ansprüche 1 bis 8 oder ein Untersetzungsgetriebe (6) nach Anspruch 9 umfasst.

## Claims

1. A planet carrier (110) for a mechanical gearbox (6) of a turbomachine (1), in particular for an aircraft, this planet carrier having a main axis (X) and comprising a cage (114) formed in a single piece with a shaft portion (115) centred on the axis (X), the cage comprising two annular flasks (114a, 114b) extending around the axis (X), one of which, referred to as first flask (114a), is connected to said shaft portion (115), and the other, referred to as second flask (114b), is connected to the first flask by bridges of material (16) distributed around the axis (X), said bridges of material (116) defining between them and with the flasks (114a, 114b), housings (118) configured to receive planet gears (8), the first and second flasks (114a, 114b) comprising respectively first and second orifices (124a, 124b) for mounting the planet gears (8) which are oriented axially and which open into said housings (118),
the first flask (114a) comprising a thinning (134) around each of the first orifices (124a), the thinning (134) defining a minimum thickness of material (E1) in the axial direction which is less than a minimum thickness (E2) of the second flask (114b) around each of the second orifices (124b),
**characterised in that** the thinning (134) comprises two or three coaxial gorges (138) extending around each of said first orifices (124a),
and **in that** the first flask (114a) is double-walled and comprises two parallel walls, respectively a first wall (114a1) and a second wall (114a2) which are connected together by an annular web (136) at the level of their external peripheries, the first wall (114a1) being connected by the material bridges (116) to the second flask (114b) and comprising said at least one thinning (134), and said second wall (114a2) being connected to said shaft portion (115).

2. The planet carrier (110) according to claim 1, wherein the first flask (114a) comprises a first face (140a) located on the side of said shaft portion (115), and a second face (140b) located on the side of the second flask (114b), at least the first face (140a) and/or the second face (140b) comprising said two or three gorges (138).

3. The planet carrier (110) according to claim 2, wherein the gorges (138) formed on the first face and/or the second face (140a, 140b) have different diameters (D1, D2, D3).

4. The planet carrier (110) according to claim 2 or 3, wherein said gorges (138) are three and comprise two gorges (138) which are located on one of the first and second faces (140b) and which extend around each other and have diameters D1 and D3 respectively, and one gorge (138) located on the other of the first and second faces (140a) and which has a diameter D2 between D1 and D3.

5. The planet carrier (110) according to any of the preceding claims, wherein each gorge (138) has a generally curved or semi-circular cross-sectional shape.

6. The planet carrier (110) according to any of the preceding claims, wherein the thinning (134) reduces a thickness of the first flask (114a) by at least 50%.

7. The planet carrier (110) according to one of the preceding claims, wherein each of the first orifices (124a) has an internal diameter (H1) which is smaller than the internal diameter (H2) of each of the second orifices (124b).

8. The planet carrier (110) according to any of the preceding claims, wherein said shaft portion (115) comprises an external toothing (115a).

9. A mechanical gearbox (6) for an aircraft turbomachine, this gearbox comprising a planet carrier (110) according to one of claims 1 to 8, planet gears (8) which are housed in said housings (118) and which are guided by bearings (126) whose axial ends are engaged in said first and second orifices (124a, 124b), and a sun gear (7) which is housed in the cage and which is meshed with the planet gears (8).

10. An aircraft turbomachine (1) comprising a planet carrier (110) according to one of claims 1 to 8 or a gearbox (6) according to claim 9.
